# EUROPEAN PATENT APPLICATION

(11) **EP 4 173 885 A1**
(43) Date of publication of application: **03.05.2023**
(21) Application number: 21829202.7
(22) Date of filing: 21.05.2021
(51) Int. Cl.: B60L 53/80

(54) **BATTERY SWAPPING PLATFORM, BATTERY SWAPPING STATION AND BATTERY SWAPPING METHOD**

(30) Priority: 24.06.2020 CN 202010589848
(71) Applicant: Nio Technology (Anhui) Co., Ltd, Hefei City, Anhui 230601 (CN)
(72) Inventor: LI, Yongjie, Shanghai 201804 (CN); ZHANG, Ning, Shanghai 201804 (CN); CAO, Jia, Shanghai 201804 (CN); ZHENG, Lang, Shanghai 201804 (CN); YANG, Chao, Shanghai 201804 (CN); XIA, Lijian, Shanghai 201804 (CN)
(74) Representative: Vossius & Partner Patentanwälte Rechtsanwälte mbB
(86) International application number: PCT/CN2021/095154
(87) International publication number: WO 2021/258943

(57) **Abstract**

The disclosure provides a battery swap platform, a battery swap station, and a battery swap method. The battery swap platform includes a parking mechanism, an accommodating mechanism, and an opening and closing mechanism. The accommodating mechanism is arranged below a vehicle parked on the parking mechanism and has an opening, and the opening and closing mechanism is arranged on the accommodating mechanism. When the opening and closing mechanism is in an open state, the opening of the accommodating mechanism can be opened. When the opening and closing mechanism is in a closed state, the opening of the accommodating mechanism can be closed, and the opening and closing mechanism and the parking mechanism form a vehicle passage path for allowing the vehicle to enter or leave the parking mechanism. In the battery swap platform provided according to the embodiment of the disclosure, a load-bearing function of the vehicle passage path is designed to be integrated to the opening and closing mechanism, so that the difficulty in load-bearing design of other apparatuses of the battery swap platform can be reduced.

## Description

### Technical Field

Embodiments of the disclosure relate to a vehicle battery swap technology, and in particular, to a battery swap platform, a battery swap station, and a battery swap method.

### Background Art

With the development of automobile technology, new energy vehicles have become the mainstream development trend of automobile industry. A battery swap station is an automated apparatus for swapping a battery for an electric vehicle.

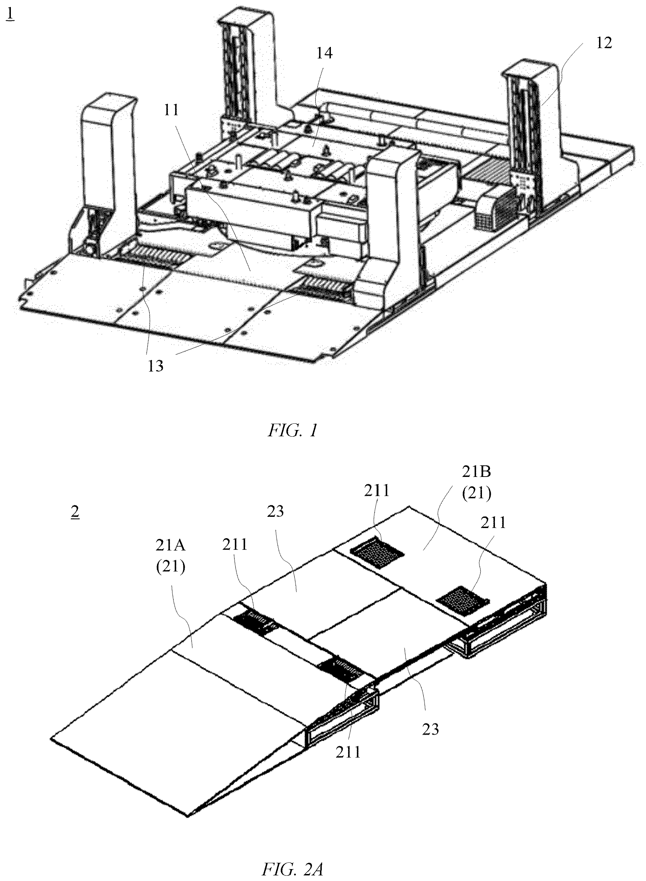

As shown in FIG. 1, an existing battery swap platform 1 is mainly composed of a parking platform 11, a vehicle hoister 12, a wheel alignment mechanism 13, and a rail guided vehicle (RGV) 14.

The parking platform 11 is configured to park a vehicle, the wheel alignment mechanism 13 is configured to position the vehicle at a designated position of the parking platform 11, the vehicle hoister 12 is configured to lift the vehicle parked on the parking platform 11 to a set height, and the rail guided vehicle 14 is configured to implement horizontal transport of a battery, vertical lifting of the battery, and a battery mounting/dismounting operation.

However, in the prior art, since the rail guided vehicle 14 directly travels on the parking platform 11, when the battery mounting/dismounting operation is performed for the vehicle on the parking platform 11, the vehicle hoister 12 must substantially lift the vehicle, leaving a moving space for the rail guided vehicle 14. As a result, a driver and a passenger have to leave the vehicle when the battery is being swapped for the vehicle. This not only increases the total time taken for vehicle battery swap, but also brings a poor battery swap experience to the vehicle owner, and there is also a risk of falling while the vehicle is being substantially lifted.

Furthermore, in the prior art, the battery is completely exposed in a visible range during conveying, which is easy to cause the risks of a collision to personnel and the battery being contaminated by intrusion of foreign objects, posing a potential safety hazard.

### Summary of the Disclosure

In view of the foregoing problems, the disclosure provides a battery swap platform, a battery swap station, and a battery swap method, to overcome or at least partially solve the foregoing problems.

A first aspect of the disclosure provides a battery swap platform, including: a parking mechanism configured to park a vehicle; an accommodating mechanism, which is arranged below the vehicle parked on the parking mechanism, and which has an opening; and an opening and closing mechanism arranged on the accommodating mechanism and capable of switching between a closed state and an open state relative to the accommodating mechanism, wherein when the opening and closing mechanism is in the open state, the opening of the accommodating mechanism is capable of being opened; and when the opening and closing mechanism is in the closed state, the opening of the accommodating mechanism is capable of being closed, and the opening and closing mechanism in the closed state and the parking mechanism form a vehicle passage path, such that the vehicle enters or leaves the parking mechanism by means of the vehicle passage path.

Optionally, the opening and closing mechanism is provided with: a support and guide device arranged on the accommodating mechanism and configured to define a movement path; and two opening and closing devices respectively arranged on the support and guide device, wherein the two opening and closing devices are movable toward each other along the movement path defined by the support and guide device so that the opening and closing mechanism is switched from the open state to the closed state, or are movable away from each other along the movement path defined by the support and guide device so that the opening and closing mechanism is switched from the closed state to the open state.

Optionally, the opening and closing mechanism is provided with: a support and guide device arranged on the accommodating mechanism and configured to define a movement path; and one opening and closing device arranged on the support and guide device, wherein the opening and closing device is movable in a first direction along the movement path defined by the support and guide device so that the opening and closing mechanism is switched from the open state to the closed state, or is movable in a second direction opposite to the first direction along the movement path defined by the support and guide device so that the opening and closing mechanism is switched from the closed state to the open state.

Optionally, the support and guide device includes two sliding rails which are respectively arranged on two opposite sides of the opening of the accommodating mechanism, and the opening and closing device(s) straddle(s) the two sliding rails; and the opening and closing mechanism further includes a driving device configured to drive the opening and closing device(s) to slide along the movement path defined by the support and guide device.

Optionally, the opening and closing device includes a single-layer door body.

Optionally, the opening and closing device includes: a fixed door body fixedly arranged on the support and guide device; and a linkage door body arranged on the fixed door body and the support and guide device, wherein the linkage door body is slidable along the movement path defined by the support and guide device so that the opening and closing device is brought into a retracted state or in an extended state, and when the opening and closing device is in the retracted state, the opening and closing mechanism is in the open state, or when the opening and closing device is in the extended state, the opening and closing mechanism is in the closed state.

Optionally, when the opening and closing device is in the retracted state, the linkage door body is superposed above the fixed door body and completely covers the fixed door body.

Optionally, the linkage door body includes a middle-layer linkage door body and a top-layer linkage door body, wherein the middle-layer linkage door body is arranged on the fixed door body and the support and guide device, and the top-layer linkage door body is arranged on the middle-layer linkage door body and the support and guide device; and wherein the middle-layer linkage door body and the top-layer linkage door body are capable of performing synchronous linked sliding in the same direction along the movement path defined by the support and guide device, so that the opening and closing device is brought into the retracted state or the extended state, and when the opening and closing device is in the retracted state, the middle-layer linkage door body is superposed above the fixed door body and completely covers the fixed door body, and the top-layer linkage door body is superposed above the middle-layer linkage door body and completely covers the middle-layer linkage door body.

Optionally, the top-layer linkage door body is provided with a top-layer limiting assembly which can abut against the middle-layer linkage door body to limit a maximum distance by which the top-layer linkage door body moves relative to the middle-layer linkage door body.

Optionally, the middle-layer linkage door body is provided with a middle-layer limiting assembly which can abut against the fixed door body to limit a maximum distance by which the middle-layer linkage door body moves relative to the fixed door body.

Optionally, the opening and closing mechanism further includes a driving device, wherein when the opening and closing device switches from the retracted state to the extended state, the driving device drives the top-layer linkage door body to slide in the first direction relative to the middle-layer linkage door body until the top-layer limiting assembly abuts against the middle-layer linkage door body; the driving device continues to drive the top-layer linkage door body to slide in the first direction, and drives the middle-layer linkage door body to perform linked sliding in the first direction by means of the top-layer linkage door body until the middle-layer limiting assembly abuts against the fixed door body; when the opening and closing device switches from the extended state to the retracted state, the driving device drives the top-layer linkage door body to slide in the second direction opposite to the first direction relative to the middle-layer linkage door body until the top-layer limiting assembly abuts against the middle-layer linkage door body; and the driving device continues to drive the top-layer linkage door body to slide in the second direction, and drives the middle-layer linkage door body to perform linked sliding in the second direction by means of the top-layer linkage door body until the middle-layer limiting assembly abuts against the fixed door body.

Optionally, the parking mechanism includes a first parking sub-mechanism and a second parking sub-mechanism, wherein the accommodating mechanism is naturally formed by the first parking sub-mechanism and the second parking sub-mechanism that are arranged separately from each other.

A second aspect of the disclosure provides a battery swap station, including: the battery swap platform according to the first aspect configured to mount or dismount a battery on or from a vehicle; a battery storage mechanism configured to store the battery; and a battery docking mechanism configured to connect the battery swap platform to the battery storage mechanism, and to convey the battery between the battery swap platform and the battery storage mechanism.

Optionally, the battery storage mechanism includes two battery storage racks and a lifting device arranged between the two battery storage racks.

Optionally, the battery storage mechanism includes a plurality of battery storage racks arranged side-by-side on a single side of the lifting device, and the lifting device can move in a horizontal direction of the battery storage racks so as to be docked with one of the plurality of battery storage racks.

Optionally, the battery storage rack includes a plurality of battery compartments arranged in a stacked manner, and the lifting device can be lifted or lowered in a vertical direction of the battery storage rack so as to be docked with one of the plurality of battery compartments.

Optionally, the battery swap station further includes charging devices which are respectively arranged in the battery compartments and are configured to be electrically connected to batteries stored in the battery compartments for charging.

A third aspect of the disclosure provides a battery swap method applied to the battery swap platform according to the first aspect, the method including: controlling the opening and closing mechanism into the closed state, such that the opening and closing mechanism in the closed state and the parking mechanism form a vehicle passage path for allowing a vehicle to enter the parking mechanism; controlling the opening and closing mechanism to switch from the closed state to the open state after the vehicle is parked on the parking mechanism, such that a battery mounting/dismounting mechanism arranged in the accommodating mechanism performs a battery mounting/dismounting operation for the vehicle parked on the parking mechanism; and controlling the opening and closing mechanism to switch from the open state to the closed state after the battery mounting/dismounting operation is completed, such that the opening and closing mechanism in the closed state and the parking mechanism form a vehicle passage path again for allowing the vehicle to leave the parking mechanism.

It can be seen from the foregoing technical solutions that in the battery swap platform, the battery swap station, and the battery swap method provided according to the embodiments of the disclosure, through the provision of the opening and closing mechanism that can be switched between the closed state and the open state, the opening and closing mechanism in the closed state and the parking mechanism are used to form the vehicle passage path for allowing the vehicle to enter or leave the parking mechanism. In this way, in the disclosure, a load-bearing function of the vehicle passage path can be designed to be integrated to the opening and closing mechanism, so that the difficulty in load-bearing design of other apparatuses of the battery swap platform is reduced.

### Brief Description of the Drawings

To illustrate the technical solutions in embodiments of the disclosure or in the prior art more clearly, a brief introduction to the drawings required for the embodiments or the prior art will be provided below. Obviously, the drawings in the following description are merely some of the embodiments of the disclosure, and those of ordinary skills in the art would also obtain other drawings according to these drawings.
FIG. 1 is a schematic diagram of an overall structure of an existing battery swap platform;
FIGS. 2A and 2B are schematic diagrams of an overall structure of a battery swap platform according to a first embodiment of the disclosure;
FIG. 3 is a schematic exploded view of the battery swap platform according to the first embodiment of the disclosure;
FIGS. 4A and 4B are schematic embodiment diagrams of an opening and closing mechanism according to the first embodiment of the disclosure;
FIGS. 5A to 5C are schematic embodiment diagrams of an opening and closing device according to the first embodiment of the disclosure;
FIGS. 6 and 7 are schematic embodiment diagrams of a battery swap station according to a second embodiment of the disclosure; and
FIG. 8 is a schematic flowchart of a battery swap method according to a third embodiment of the disclosure.

### Reference signs of elements:

1: Battery swap platform (prior art);
11: Parking platform;
12: Vehicle hoister;
13: Wheel alignment mechanism;
14: Rail guided vehicle;
2: Battery swap platform;
21: Parking mechanism;
21A: First parking sub-mechanism;
21B: Second parking sub-mechanism;
211: Wheel alignment device;
22: Accommodating mechanism;
221: Opening;
23: Opening and closing mechanism;
231: Support and guide device;
231A, 231B: Sliding rail;
232, 232A, 232B: Opening and closing device;
23201: Door panel;
23202: Door beam;
23203: Linear movement assembly;
2321: Single-layer door body;
2322: Fixed door body;
2323: Linkage door body;
2324: Middle-layer linkage door body;
23241: Middle-layer limiting assembly;
23241A: Limiting member;
23241B: Middle-layer door beam;
23241C: Linear movement assembly;
2325: Top-layer linkage door body;
23251: Top-layer limiting assembly;
23251A: Limiting member;
23251B: Top-layer door beam;
23251C: Linear movement assembly;
233: Driving device;
24: Battery mounting/dismounting mechanism;
25: Vehicle hoisting mechanism;
3: Battery swap station;
4: Battery storage mechanism;
41A, 41B: Battery storage rack;
411: Battery compartment;
42: Lifting device;
5: Battery docking mechanism.

### Detailed Description of Embodiments

To enable those skilled in the art to better understand the technical solutions in the embodiments of the disclosure, the technical solutions in the embodiments of the disclosure will be clearly and completely described below in conjunction with the accompanying drawings in the embodiments of the disclosure. Obviously, the described embodiments are merely some, rather than all, of the embodiments of the disclosure. Based on the embodiments of the disclosure, all other embodiments obtained by those of ordinary skill in the art shall fall within the scope of protection of the embodiments of the disclosure.

The specific implementation of the embodiments of the disclosure will be further described below with reference to the accompanying drawings in the embodiments of the disclosure.

### First embodiment

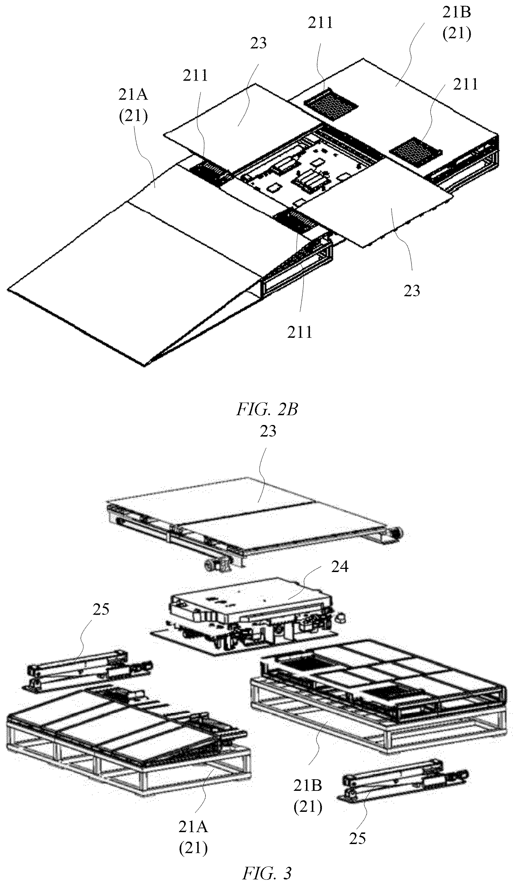

The first embodiment of the disclosure provides a battery swap platform. As shown in FIGS. 2A and 2B, the battery swap platform 2 mainly includes a parking mechanism 21, an accommodating mechanism 22, and an opening and closing mechanism 23.

The parking mechanism 21 is configured to park a vehicle.

Optionally, the parking mechanism 21 is provided with a wheel alignment device 211. In this embodiment, the wheel alignment device 211 is used to position wheels of the vehicle, such that the vehicle is stably parked on the parking mechanism 21.

The accommodating mechanism 22 is arranged below the vehicle parked on the parking mechanism 21 and has an opening 221.

In this embodiment, the parking mechanism 21 includes a first parking sub-mechanism 21A and a second parking sub-mechanism 21B. The first parking sub-mechanism 21A and the second parking sub-mechanism 21B are arranged separately from each other, the first parking sub-mechanism 21A may be configured to position two front wheels of the vehicle, while the second parking sub-mechanism 21B may be configured to position two rear wheels of the vehicle, and the accommodating mechanism 22 is naturally formed by the first parking sub-mechanism 21A and the second parking sub-mechanism 21B that are arranged separately from each other.

Referring to FIG. 3, in another embodiment, a battery mounting/dismounting mechanism 24 and a vehicle hoisting mechanism 25 may be arranged inside the accommodating mechanism 22 of the battery swap platform 2. The vehicle hoisting mechanism 25 is configured to only lift the vehicle parked on the parking mechanism 21, to cause the vehicle to be arranged horizontally, and the battery mounting/dismounting mechanism 24 is configured to perform a battery mounting/dismounting operation for the vehicle in a horizontally arranged state.

The opening and closing mechanism 23 is arranged on the accommodating mechanism 22, and can switch between a closed state and an open state relative to the accommodating mechanism 22.

In this embodiment, when the opening and closing mechanism 23 is in the open state, the opening 221 of the accommodating mechanism 22 can be opened, so that the battery mounting/dismounting mechanism 24 and the vehicle hoisting mechanism 25 arranged inside the accommodating mechanism 22 extend out of the accommodating mechanism 22, so as to slightly lift the vehicle on the parking mechanism 21 and/or to perform a battery mounting/dismounting operation for the vehicle.

In another embodiment, when the opening and closing mechanism 23 is in the closed state, the opening 221 of the accommodating mechanism 22 can be closed, and the opening and closing mechanism 23 in the closed state and the parking mechanism 21 form a vehicle passage path, such that the vehicle enters or leaves the parking mechanism 21 by means of the formed vehicle passage path.

Specifically, as shown in FIG. 2A, when the opening and closing mechanism 23 is in the closed state, the opening and closing mechanism 23 in the closed state can engage with the first parking sub-mechanism 21A and the second parking sub-mechanism 21B, so that the first parking sub-mechanism 21A, the opening and closing mechanism 23 in the closed state and the second parking sub-mechanism 21B form a completed vehicle passage path for allowing the vehicle to enter or leave the parking mechanism 21.

The opening and closing mechanism 23 of the disclosure may be implemented by means of various structural forms. Several specific implementations of the opening and closing mechanism 23 of the disclosure will be described in detail below with reference to the accompanying drawings. It should be noted that the opening and closing mechanism 23 of the disclosure is not limited to the following embodiments, and opening and closing mechanisms in other forms that can be used to open or close the opening of the accommodating mechanism may also be applied to the disclosure.

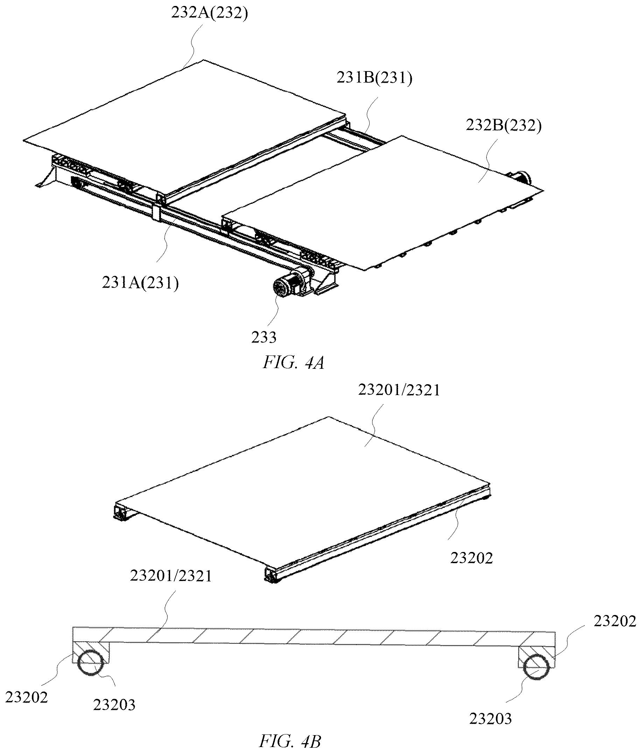

As shown in FIGS. 4A and 4B, in an embodiment, the opening and closing mechanism 23 may be designed as a bidirectional door opening mechanism. Specifically, the opening and closing mechanism 23 mainly includes a support and guide device 231 and two opening and closing devices 232A, 232B.

The support and guide device 231 is arranged on the accommodating mechanism 22 and configured to define a movement path.

The two opening and closing devices 232A, 232B are arranged on the support and guide device 231. The two opening and closing devices 232A, 232B can move toward each other along the movement path defined by the support and guide device 231 so that the opening and closing mechanism 23 is switched from the open state to the closed state, or move away from each other along the movement path defined by the support and guide device 231 so that the opening and closing mechanism 23 is switched from the closed state to the open state.

In an embodiment, the support and guide device 231 includes two sliding rails 231A, 231B which are respectively arranged on two opposite sides of the opening 221 of the accommodating mechanism 22, and the opening and closing devices 232A, 232B respectively straddle the two sliding rails 231A, 231B.

In an embodiment, the opening and closing mechanism 23 further includes a driving device 233 configured to drive the opening and closing devices 232A, 232B to slide along the movement path defined by the support and guide device 231.

For example, the driving device 233 drives the opening and closing devices 232A, 232B connected thereto to slide along the movement path defined by the support and guide device 231, to switch between the open state and the closed state.

Specifically, the opening and closing device 232 includes a door panel 23201 and two door beams 23202 arranged on two opposite sides of the door panel 23201, and two opposite sides of each of the door beams 23202 are further provided with two linear movement assemblies 23203. The linear movement assemblies 23203 are respectively slidably arranged on the two sliding rails 23 1A, 231B, such that the entire opening and closing device 232 slides along the movement path defined by the support and guide device 231.

In another embodiment, the opening and closing mechanism 23 may also be designed as a unilateral door opening mechanism. Specifically, the opening and closing mechanism 23 mainly includes a support and guide device 231 and one opening and closing device 232.

The support and guide device 231 is arranged on the accommodating mechanism 22 and configured to define a movement path. The opening and closing device 232 is arranged on the support and guide device 231 and can move in a first direction along the movement path defined by the support and guide device 231 so that the opening and closing mechanism 23 is switched from the open state to the closed state, or move in a second direction opposite to the first direction along the movement path defined by the support and guide device 231 so that the opening and closing mechanism 23 is switched from the closed state to the open state.

In an embodiment, the support and guide device 231 includes two sliding rails 231A, 231B which are respectively arranged on two opposite sides of the opening 221 of the accommodating mechanism 22, and the opening and closing device 232 straddles the two sliding rails 231A, 231B.

In an embodiment, the opening and closing mechanism 23 further includes a driving device 233 configured to drive the opening and closing device 232 to slide along the movement path defined by the support and guide device 231.

Furthermore, the opening and closing device 232 according to the embodiment of the disclosure may be, for example, a single-layer door body 1321 (the embodiment shown in FIGS. 4A and 4B), or a multi-layer linkage door.

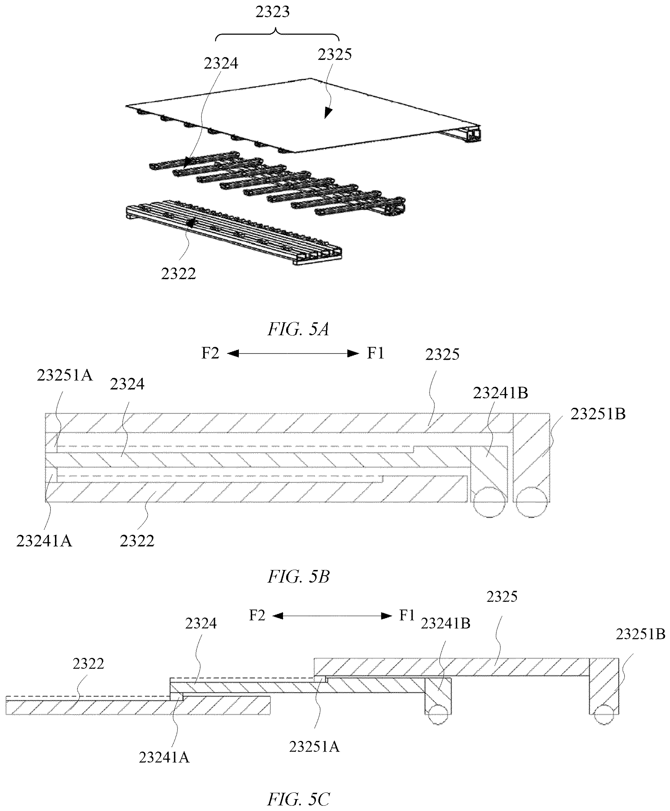

An opening and closing device 232 of a multi-layer linkage door design will be described in detail below with reference to FIGS. 5A to 5C.

As shown in the figures, the opening and closing device 232 of this embodiment is mainly composed of a fixed door body 2322 and a linkage door body 2323.

The fixed door body 2322 is fixedly arranged on the support and guide device 231, and the linkage door body 2323 is arranged on the fixed door body 2322 and the support and guide device 231.

In this embodiment, two opposite sides of the linkage door body 2323 are respectively movably arranged on the fixed door body 2322 and the support and guide device 231, and can relative to

Specifically, the linkage door body 2323 can slide along the movement path defined by the support and guide device 231, so that the opening and closing device 232 is brought into a retracted state or an extended state.

In this embodiment, when the opening and closing device 232 is in the retracted state (as shown in FIG. 5B), the linkage door body 2323 is superposed above the fixed door body 2322 and completely covers the fixed door body 2322. In this case, the opening and closing mechanism 23 is in the open state.

When the opening and closing device 232 is in the extended state (as shown in FIG. 5C), the linkage door body 2323 and the fixed door body 2322 are in a deployed state (that is, the linkage door body 2323 is only partially superposed above the fixed door body 2322). In this case, the opening and closing mechanism 23 is in the closed state.

In the embodiment shown in FIGS. 5A to 5C, the linkage door body 2323 includes a middle-layer linkage door body 2324 and a top-layer linkage door body 2325.

Two opposite sides of the middle-layer linkage door body 2324 are respectively arranged on the fixed door body 2322 and the support and guide device 231, and two opposite sides of the top-layer linkage door body 2325 are respectively arranged on the middle-layer linkage door body 2324 and the support and guide device 231. The middle-layer linkage door body 2324 and the top-layer linkage door body 2325 can perform synchronous linked sliding in the same direction along the movement path defined by the support and guide device 231, so that the opening and closing device 232 is brought into the retracted state (the state shown in FIG. 5B) or the extended state (the state shown in FIG. 5C).

It can be seen from FIG. 5B that when the opening and closing device 232 is in the retracted state, the middle-layer linkage door body 2324 is superposed above the fixed door body 2322 and completely covers the fixed door body 2322. In addition, the top-layer linkage door body 2325 is superposed above the middle-layer linkage door body 2324 and completely covers the middle-layer linkage door body 2324. In this way, a space occupied by the opening and closing device 232 can be reduced.

In this embodiment, the top-layer linkage door body 2325 is provided with a top-layer limiting assembly 23251. The top-layer limiting assembly 23251 abuts against the middle-layer linkage door body 2324 to limit a maximum distance by which the top-layer linkage door body 2325 moves relative to the middle-layer linkage door body 2324.

Specifically, the top-layer limiting assembly 23251 includes a limiting member 23251A and a top-layer door beam 23251B which are arranged on two opposite sides of the top-layer linkage door body 2325, and a linear movement assembly 23251C is arranged below the top-layer door beam 23251B. The linear movement assembly 23251C can slide along the movement path defined by the support and guide device 231. The top-layer linkage door body 2325 may move in a direction F1 relative to the middle-layer linkage door body 2324 until the limiting member 23251A abuts against the middle-layer linkage door body 2324, or the top-layer linkage door body 2325 may move in a direction F2 relative to the middle-layer linkage door body 2324 until the top-layer door beam 23251B abuts against the middle-layer linkage door body 2324.

The middle-layer linkage door body 2324 is provided with a middle-layer limiting assembly 23241. The middle-layer limiting assembly 23241 abuts against the fixed door body 2322 to limit a maximum distance by which the middle-layer linkage door body 2324 moves relative to the fixed door body 2322.

Specifically, the middle-layer limiting assembly 23241 includes a limiting member 23241A and a middle-layer door beam 23241B which are arranged on two opposite sides of the middle-layer linkage door body 2324, and a linear movement assembly 23241C is arranged below the middle-layer door beam 23241B. The linear movement assembly 23241C can slide along the movement path defined by the support and guide device 231. The middle-layer linkage door body 2324 may move in the first direction F1 relative to the fixed door body 2322 until the limiting member 23241A abuts against the fixed door body 2322, or the middle-layer linkage door body 2324 may move in the second direction F2 relative to the fixed door body 2322 until the middle-layer door beam 23241B abuts against the fixed door body 2322.

In this embodiment, the opening and closing mechanism 23 further includes a driving device (not shown) configured to drive the opening and closing device 232 (multi-layer linkage door) to switch between the retracted state and the extended state.

Specifically, when the opening and closing device 232 is switched from the retracted state to the extended state, the driving device drives the top-layer linkage door body 2325 to slide in the first direction F1 relative to the middle-layer linkage door body 2324 until the limiting member 23251A of the top-layer limiting assembly 23251 abuts against the middle-layer linkage door body 2324. The driving device continues to drive the top-layer linkage door body 2325 to slide in the first direction F1, and drives the middle-layer linkage door body 2324 to perform linked sliding in the first direction F1 by means of the top-layer linkage door body 2325 until the limiting member 23241A of the middle-layer limiting assembly 23241 abuts against the fixed door body 2322.

On the contrary, when the opening and closing device 232 is switched from the extended state to the retracted state, the driving device drives the top-layer linkage door body 2325 to slide in the second direction F2 opposite to the first direction F1 relative to the middle-layer linkage door body 2324 until the top-layer door beam 23251B of the top-layer limiting assembly 23251 abuts against the middle-layer linkage door body 2324. The driving device 233 continues to drive the top-layer linkage door body 2325 to slide in the second direction F2, and drives the middle-layer linkage door body 2324 to perform linked sliding in the second direction F2 by means of the top-layer linkage door body 2325 until the middle-layer door beam 23241B of the middle-layer limiting assembly 23241 abuts against the fixed door body 2322.

It should be noted that the opening and closing mechanism 23 may also be implemented by using a flexible door (such as a rolling door) cooperating with a load-bearing frame, and when the opening and closing mechanism 23 is in the closed state, the load-bearing frame of the opening and closing mechanism 23 and the parking mechanism 21 can form a vehicle passage path, such that the vehicle enters or leaves the parking mechanism 21 by means of the vehicle passage path.

### Second embodiment

The second embodiment of the disclosure provides a battery swap station.

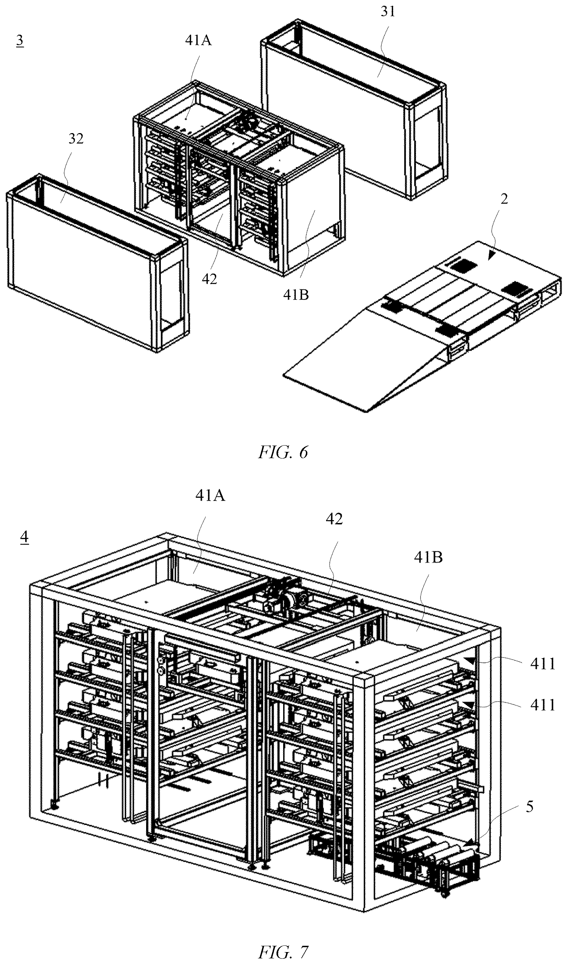

Referring to FIGS. 6 and 7, the battery swap station 3 provided in this embodiment mainly includes the battery swap platform 2 described in the first embodiment, a battery storage mechanism 4, and a battery docking structure 5.

In this embodiment, the battery swap platform 2 is configured to mount or dismount a battery on or from a vehicle, the battery storage mechanism 4 is configured to store the battery, and the battery docking mechanism 5 connects the battery swap platform 2 to the battery storage mechanism 4 and is configured to convey the battery between the battery swap platform 2 and the battery storage mechanism 4.

In this embodiment, the battery storage mechanism 4 may include two battery storage racks 41A, 41B and a lifting device 42 arranged between the two battery storage racks 41A, 41B.

Optionally, each of the battery storage racks 41A, 41B includes a plurality of battery compartments 411 arranged in a stacked manner, and the lifting device 42 can be lifted or lowered in a vertical direction of the battery storage racks 41A, 41B so as to be docked with one of the plurality of battery compartments 411.

Optionally, a plurality of battery storage racks 41A, 41B may also be arranged side-by-side on a single side of the lifting device 42, and the lifting device 42 can move in a horizontal direction of the battery storage racks 41A, 41B so as to be docked with one of the plurality of battery storage racks 41A, 41B that are arranged side-by-side.

For example, a guide rail may be installed below the lifting device 42, so that the lifting device 42 can move along the guide rail between the plurality of battery storage racks 41A, 41B arranged side-by-side, thereby increasing the capacity of the battery compartment 411.

The battery docking mechanism 5 may be implemented by means of various structural designs. For example, the battery docking mechanism 5 may be a conveying mechanism such as a roller conveying line, a chain conveying line and a belt conveying line, but the disclosure is not limited thereto. The battery docking mechanism 5 may also be presented by means of a guide rail cooperating with a docking vehicle, but the disclosure is not limited thereto.

In another embodiment, the battery swap station 3 may further include charging devices (not shown) which are respectively arranged in the battery compartments 411 and are configured to be electrically connected to batteries stored in the battery compartments 411 for charging.

As shown in FIG. 6, in another embodiment, the battery swap station 3 may be further provided with an electrical room 31 and a rest room 32. The electrical room 31 is responsible for the charging control and management of each charging device, as well as for motion logic control of each component in the entire battery swap station 3, and the rest room 32 is an area for staff of the battery swap station 3 to rest.

### Third embodiment

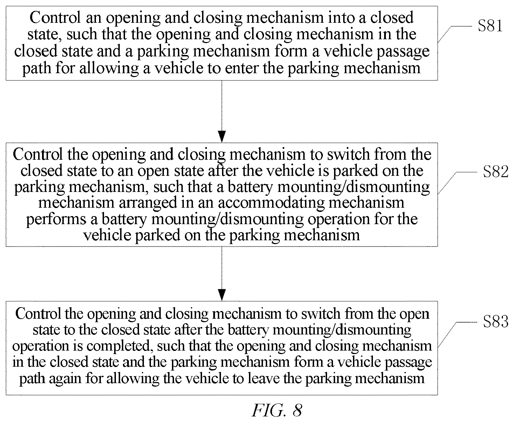

FIG. 8 shows main steps of a battery swap method according to the third embodiment of the disclosure. The battery swap method provided according to the embodiment of the disclosure is applied to the battery swap platform 2 described in the first embodiment, and mainly includes the following steps.

In step S81, the opening and closing mechanism is controlled into the closed state, such that the opening and closing mechanism in the closed state and the parking mechanism form a vehicle passage path for allowing a vehicle to enter the parking mechanism.

In step S82, after the vehicle is parked on the parking mechanism, the opening and closing mechanism is controlled to switch from the closed state to the open state, such that a battery mounting/dismounting mechanism arranged in the accommodating mechanism performs a battery mounting/dismounting operation for the vehicle parked on the parking mechanism.

Optionally, a wheel alignment device on the parking mechanism can be used to position wheels of the vehicle, such that the vehicle is positioned at a designated position of the parking mechanism.

Optionally, before the battery mounting/dismounting mechanism in the accommodating mechanism is used to perform the battery mounting/dismounting operation for the vehicle parked on the parking mechanism, the vehicle hoisting mechanism arranged in the accommodating mechanism can be further used to slightly lift the vehicle on the parking mechanism, to cause the vehicle to be arranged horizontally, and then the battery mounting/dismounting mechanism is provided to perform the battery mounting/dismounting operation for the horizontally arranged vehicle.

In step S83, after the battery mounting/dismounting operation is completed, the opening and closing mechanism is controlled to switch from the open state to the closed state, such that the opening and closing mechanism in the closed state and the parking mechanism form a vehicle passage path again for allowing the vehicle to leave the parking mechanism.

In summary, in the battery swap platform provided according to the embodiment of the disclosure, through the provision of the opening and closing mechanism that can be switched between the closed state and the open state, the opening and closing mechanism in the closed state and the parking mechanism are used to jointly form a vehicle passage path, such that the vehicle enters or leaves the parking mechanism by means of the formed vehicle passage path. In this way, a load-bearing function of the vehicle passage path is designed to be integrated to the opening and closing mechanism, so that the difficulty in load-bearing design of other apparatuses of the battery swap platform can be reduced.

Furthermore, by means of a design mechanism of the opening and closing mechanism combined with the accommodating mechanism, the battery mounting/dismounting mechanism can be transferred to below the vehicle parked on the parking mechanism, and by opening the opening of the accommodating mechanism, the battery mounting/dismounting mechanism extends out of the accommodating mechanism and performs a battery mounting/dismounting operation for the vehicle. In this way, in the disclosure, there is no need to reserve a moving space for the battery mounting/dismounting mechanism on a parking mechanism (the parking platform), so that during the battery mounting/dismounting operation, the vehicle only needs to be slightly lifted, so that the vehicle is in a horizontally arranged state. Therefore, battery swap can be completed without the need for a driver and a passenger to leave the vehicle, which can improve battery swap experience of the vehicle owner. Compared with the prior art in which it is required to substantially lift the vehicle to a preset height, the embodiments of the disclosure can significantly reduce a risk of accidental falling of the vehicle, improve safety of battery swap operation, and reduce the total time taken for vehicle battery swap.

Finally, it should be noted that the foregoing embodiments are merely used for illustrating rather than limiting the technical solutions of the embodiments of the disclosure. Although the disclosure has been illustrated in detail with reference to the foregoing embodiments, it should be understood by those of ordinary skill in the art that the technical solutions described in the foregoing embodiments may still be modified, or some of the technical features therein may be equivalently substituted, but these modifications or substitutions do not make the essence of corresponding technical solutions depart from the spirit and scope of the technical solutions of the embodiments of the disclosure.

## Claims

1. A battery swap platform, comprising:
a parking mechanism configured to park a vehicle;
an accommodating mechanism, which is arranged below the vehicle parked on the parking mechanism, and which has an opening; and
an opening and closing mechanism arranged on the accommodating mechanism and capable of switching between a closed state and an open state relative to the accommodating mechanism, wherein
when the opening and closing mechanism is in the open state, the opening of the accommodating mechanism is capable of being opened; and
when the opening and closing mechanism is in the closed state, the opening of the accommodating mechanism is capable of being closed, and the opening and closing mechanism in the closed state and the parking mechanism form a vehicle passage path, such that the vehicle enters or leaves the parking mechanism by means of the vehicle passage path.

2. The battery swap platform according to claim 1, wherein the opening and closing mechanism is provided with:
a support and guide device arranged on the accommodating mechanism and configured to define a movement path; and
two opening and closing devices respectively arranged on the support and guide device, wherein the two opening and closing devices are movable toward each other along the movement path defined by the support and guide device so that the opening and closing mechanism is switched from the open state to the closed state, or are movable away from each other along the movement path defined by the support and guide device so that the opening and closing mechanism is switched from the closed state to the open state.

3. The battery swap platform according to claim 1, wherein the opening and closing mechanism is provided with:
a support and guide device arranged on the accommodating mechanism and configured to define a movement path; and
one opening and closing device arranged on the support and guide device, wherein the opening and closing device is movable in a first direction along the movement path defined by the support and guide device so that the opening and closing mechanism is switched from the open state to the closed state, or is movable in a second direction opposite to the first direction along the movement path defined by the support and guide device so that the opening and closing mechanism is switched from the closed state to the open state.

4. The battery swap platform according to claim 2 or 3, wherein
the support and guide device comprises two sliding rails which are respectively arranged on two opposite sides of the opening of the accommodating mechanism, and the opening and closing device(s) straddle(s) the two sliding rails; and
the opening and closing mechanism further comprises a driving device configured to drive the opening and closing device(s) to slide along the movement path defined by the support and guide device.

5. The battery swap platform according to claim 2 or 3, wherein the opening and closing device comprises a single-layer door body.

6. The battery swap platform according to claim 2 or 3, wherein the opening and closing device comprises:
a fixed door body fixedly arranged on the support and guide device; and
a linkage door body arranged on the fixed door body and the support and guide device, wherein
the linkage door body is slidable along the movement path defined by the support and guide device so that the opening and closing device is brought into a retracted state or in an extended state, and when the opening and closing device is in the retracted state, the opening and closing mechanism is in the open state, or when the opening and closing device is in the extended state, the opening and closing mechanism is in the closed state.

7. The battery swap platform according to claim 6, wherein when the opening and closing device is in the retracted state, the linkage door body is superposed above the fixed door body and completely covers the fixed door body.

8. The battery swap platform according to claim 6, wherein the linkage door body comprises a middle-layer linkage door body and a top-layer linkage door body, wherein the middle-layer linkage door body is arranged on the fixed door body and the support and guide device, and the top-layer linkage door body is arranged on the middle-layer linkage door body and the support and guide device; and wherein
the middle-layer linkage door body and the top-layer linkage door body are capable of performing synchronous linked sliding in the same direction along the movement path defined by the support and guide device, so that the opening and closing device is brought into the retracted state or the extended state, and when the opening and closing device is in the retracted state, the middle-layer linkage door body is superposed above the fixed door body and completely covers the fixed door body, and the top-layer linkage door body is superposed above the middle-layer linkage door body and completely covers the middle-layer linkage door body.

9. A battery swap station, comprising:
a battery swap platform according to any one of claims 1 to 8 configured to mount or dismount a battery on or from a vehicle;
a battery storage mechanism configured to store the battery; and
a battery docking mechanism configured to connect the battery swap platform to the battery storage mechanism, and to convey the battery between the battery swap platform and the battery storage mechanism.

10. A battery swap method applied to a battery swap platform according to any one of claims 1 to 8, the method comprising:
controlling the opening and closing mechanism into the closed state, such that the opening and closing mechanism in the closed state and the parking mechanism form a vehicle passage path for allowing a vehicle to enter the parking mechanism;
controlling the opening and closing mechanism to switch from the closed state to the open state after the vehicle is parked on the parking mechanism, such that a battery mounting/dismounting mechanism arranged in the accommodating mechanism performs a battery mounting/dismounting operation for the vehicle parked on the parking mechanism; and
controlling the opening and closing mechanism to switch from the open state to the closed state after the battery mounting/dismounting operation is completed, such that the opening and closing mechanism in the closed state and the parking mechanism form a vehicle passage path again for allowing the vehicle to leave the parking mechanism.
